# EUROPÄISCHE PATENTSCHRIFT

(11) **EP 3 017 343 B1**
(45) Veröffentlichungstag und Bekanntmachung des Hinweises auf die Patenterteilung: **29.05.2019**
(21) Anmeldenummer: 14735911.1
(22) Anmeldetag: 30.06.2014
(51) Int. Cl.: G05B 19/4099

(54) **VERFAHREN ZUM HERSTELLEN EINES DREIDIMENSIONALEN OBJEKTS**
METHOD FOR PRODUCING A THREE-DIMENSIONAL OBJECT
PROCÉDÉ DE FABRICATION D'UN OBJET TRIDIMENSIONNEL

(30) Priorität: 01.07.2013 DE 102013212803
(43) Veröffentlichungstag der Anmeldung: 11.05.2016
(73) Patentinhaber: EOS GmbH Electro Optical Systems, 82152 Krailling (DE)
(72) Erfinder: WEILHAMMER, Joseph, 82266 Inning (DE); HÜMMELER, Ludger, 57368 Lennestadt (DE); KOTILA, Juha, FI-20540 Turku (FI)
(74) Vertreter: Prüfer & Partner mbB Patentanwälte · Rechtsanwälte
(86) Internationale Anmeldenummer: PCT/EP2014/063864
(87) Internationale Veröffentlichungsnummer: WO 2015/000854

(56) Entgegenhaltungen:
- DE-A1- 19 727 934
- US-A1- 2004 153 192
- US-B1- 6 505 089

## Beschreibung

Die Erfindung betrifft ein Verfahren zur schichtweisen Herstellung eines dreidimensionalen Objekts nach dem Oberbegriff des Patentanspruchs 1. Insbesondere betrifft die Erfindung ein Verfahren zum Lasersintern von Bauteilen.

Generative Fertigungsverfahren werden in zunehmendem Umfang nicht mehr nur für die Herstellung von Prototypen oder von Kleinserien verwendet, sondern die Entwicklung geht hin zur Serienfertigung von voll funktionsfähigen Bauteilen mittels Schichtaufbauverfahren. Ein sehr wichtiger Aspekt bei der Serienfertigung ist die Fertigungszeit. Eine möglichst kurze Fertigungszeit steht normalerweise aber im Widerspruch zur Realisierung von möglichst kleinen Objektdetails. Bei einem Schichtbauverfahren zeigt sich dieser Widerspruch unmittelbar an den Bauparametern:
Wird beispielsweise beim Lasersintern für die Bestrahlung zur Verfestigung des Baumaterials ein großer Laserstrahlfokus gewählt, so verkürzt dies den Bauvorgang. Allerdings verringert ein großer Fokus die erzielbare Detailgenauigkeit am herzustellenden Objekt. Auch die Dicke der im Schichtbauprozess aufzutragenden Baumaterialschichten stellt letztendlich einen Kompromiss zwischen Bauzeit und Detailgenauigkeit dar. Wird eine große Schichtdicke gewählt, so verringert sich die Gesamtzahl der Schichten. Damit sinkt aber die Detailgenauigkeit, was sich in erster Linie bei Bauteiloberflächen zeigt, welche gegenüber der Vertikalen eine Neigung besitzen: Je größer die Schichtdicke, desto unvollkommener wird eine geneigte Oberfläche realisiert. Die geneigte Oberfläche weist ein Stufenprofil auf, dass umso gröber ist, je größer die Schichtdicke ist.

DE 43 09 524 C1 schlägt ein Verfahren vor, bei dem die Oberflächenbereiche eines Objektes mittels eines Laserstrahls mit kleinem Durchmesser verfestigt werden, während der Innenbereich des Objektes mit einem Laserstrahl mit großem Durchmesser verfestigt wird. Hierzu wird nach dem Auftrag einer Baumaterialschicht einer vorgegebenen Dicke lediglich der der Oberfläche des Objektes entsprechende Teil der Schicht verfestigt, während keine Verfestigung des Innenbereiches stattfindet. Erst nach dem Auftrag von N Schichten, wobei N eine ganze Zahl größer 1 ist, wird mittels eines Laserstrahls mit großem Durchmesser der Innenbereich aller N Schichten auf einmal verfestigt.

Das Verfahren nach DE 43 09 524 C1 bietet insbesondere bei komplexen Bauteilen mit kompliziert gestalteten Oberflächen Nachteile, da eine komplexe Oberfläche zu einer ausgedehnten Randlinie pro Objektquerschnitt führt und damit zu einer lang andauernden Verfestigung dieser Konturlinie pro Schicht.

DE 197 27 934 A1 beschreibt eine alternative Herangehensweise zur Optimierung des Kompromisses zwischen Bauzeit und Detailgenauigkeit. Die Druckschrift schlägt vor, nach einer Analyse des Bauteils dieses interaktiv in Segmente aufzuteilen und die Dicke der Bauteilschichten für die einzelnen Segmente gesondert festzulegen. Dadurch können kritischen Bereichen, wie beispielsweise schmalen Stegen, individuelle geringe Schichtdicken zugeordnet werden, während anderen Bereichen, wie beispielsweise zu den Schichten senkrechten Wänden des Bauteils, dickere Schichten zugewiesen werden. Insgesamt wird dadurch eine Verringerung der Bauzeit angestrebt.

Das Verfahren nach DE 197 27 934 A1 verzichtet insbesondere darauf, für den gesamten Objektquerschnitt zwingend eine konstante Schichtdicke zu wählen. Nur in Segmenten, denen kritische Bereiche zugeordnet sind, wird die Schichtdicke gering gewählt. Solch eine Vorgehensweise ist insbesondere beim Laminated Object Manufacturing von Vorteil, wo Papierschichten übereinander geklebt werden. In der Stereolithographie und beim Lasersintern stößt solch ein Vorgehen jedoch auf ein Problem:
Es ist kompliziert, eine dünne Baumaterialschicht lediglich in einem einem Segment zugeordneten Teilbereich des Bauraums aufzutragen und in anderen Teilbereichen des Bauraums kein Baumaterial aufzutragen.

Die vorliegende Erfindung hat es sich daher zur Aufgabe gemacht, ein Verfahren zum schichtweisen Herstellen eines dreidimensionalen Objektes mittels Verfestigens durch elektromagnetische Strahlung oder energetische Teilchenstrahlung bereitzustellen, bei dem ein Kompromiss zwischen Bauzeit und Detailgenauigkeit auch für die Herstellung solcher Objekte optimiert ist, bei denen die erforderliche Detailgenauigkeit innerhalb des Objektes stark variiert.

Die Aufgabe wird gelöst durch ein Verfahren nach Anspruch 1.

Weiterbildungen der Erfindung sind in den Unteransprüchen angegeben.

Erfindungsgemäß wird bei der Verfestigung des Baumaterials nicht wie in DE 43 09 524 C1 statisch zwischen einem Innenbereich eines Objektquerschnitts und einem Randbereich desselben unterschieden. Abweichend von der Herangehensweise in DE 197 27 934 A1 werden erfindungsgemäß für eine weitere Optimierung des Kompromisses zwischen Bauzeit und Detailgenauigkeit nicht die Schichtdicken angepasst, sondern die Belichtungsparameter für eine Verfestigung des Baumaterials. Insbesondere werden Bereiche, in denen eine hohe Detailgenauigkeit erforderlich ist, auf andere Art und Weise verfestigt als Bereiche, in denen eine geringere Detailgenauigkeit ausreicht.

Weitere Merkmale und Zweckmäßigkeiten der Erfindung ergeben sich aus der Beschreibung von Ausführungsbeispielen anhand der Figuren. Von den Figuren zeigen:
- Fig. 1: eine schematische Darstellung einer Lasersintervorrichtung als Beispiel einer Vorrichtung zum schichtweisen Herstellen eines dreidimensionalen Objekts;
- Fig. 2: einen Schnitt durch einen Teilbereich eines herzustellenden Objektes senkrecht zu den Schichten gemäß einem ersten Ausführungsbeispiel der vorliegenden Erfindung; und
- Fig. 3: einen Schnitt durch ein herzustellendes Objekt senkrecht zu den aufgetragenen Schichten gemäß einem zweiten Ausführungsbeispiel der Erfindung.

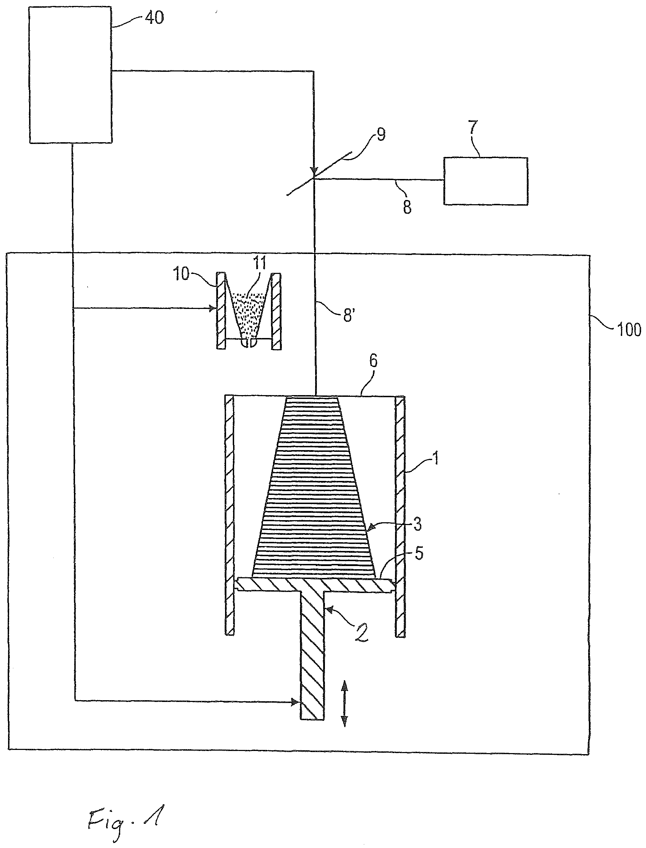

Fig. 1 zeigt in schematischer Weise eine Lasersintervorrichtung als Beispiel einer Vorrichtung zum schichtweisen Herstellen eines dreidimensionalen Objekts mittels eines generativen Fertigungsverfahrens. Die Vorrichtung, in der nach Anpassung der Steuereinrichtung das erfindungsgemäße Verfahren durchgeführt werden kann, weist einen nach oben hin offenen Behälter 1 mit einem darin in vertikaler Richtung bewegbaren Träger 2 auf, der das zu bildende Objekt trägt. Der Träger 2 wird in vertikaler Richtung so eingestellt, dass die jeweils zu verfestigende Schicht des Objekts in einer Arbeitsebene 6 liegt. Weiterhin ist ein Beschichter 10, 11 vorgesehen zum Aufbringen des durch elektromagnetische Strahlung zu verfestigenden pulverförmigen Aufbaumaterials. Als Quelle der elektromagnetischen Strahlung ist ein Laser 7 vorgesehen. Der durch den Laser 7 erzeugte Laserstrahl 8 wird durch eine Ablenkeinheit 9 in die Prozesskammer 100 gelenkt und in einem vorbestimmten Punkt in der Arbeitsebene 6 fokussiert. Es ist ferner eine Steuereinrichtung 40 vorgesehen, welche die Bestandteile der Vorrichtung in koordinierter Weise zum Durchführen des Bauprozesses steuert. Die Steuerung wird u.a. in Abhängigkeit von CAD-Daten des herzustellenden Objekts durchgeführt.

Als pulverförmiges Aufbaumaterial können alle für das Lasersinterverfahren geeigneten Pulver bzw. Pulvermischungen verwendet werden. Solche Pulver umfassen beispielsweise Kunststoffpulver wie Polyamid oder Polystyrol, PEEK, Metallpulver wie Edelstahlpulver oder andere, dem jeweiligen Zweck angepasste Metallpulver, insbesondere Legierungen, kunststoffbeschichteten Sand oder Keramikpulver.

Ein Betrieb der Lasersintervorrichtung erfolgt in der Regel so, dass der Beschichter 10, 11 über das Baufeld fährt und eine Pulverschicht mit einer vorbestimmten Dicke d, die nicht für alle Schichten gleich sein muss, im gesamten Baufeld aufbringt. Anschließend wird mit dem Laserstrahl der Querschnitt des Objekts 3 in der jeweiligen Schicht in der Arbeitsebene 6 bestrahlt und das Pulver dort verfestigt. Dann wird der Träger 2 abgesenkt und eine neue Pulverschicht aufgebracht. Die Herstellung des Objekts erfolgt auf diese Weise Schicht für Schicht. Nach Fertigstellung wird das Objekt entnommen und ggf. z.B. durch Fräsen nachbehandelt und/oder einer Qualitätskontrolle unterzogen.

Innerhalb eines Objektquerschnitts kann man zwischen einem Konturbereich und einem Innenbereich unterscheiden. Der Konturbereich entspricht dabei dem Randbereich (Rand im mathematisch-topologischen Sinne) des Objektes, wohingegen der Innenbereich die Querschnittsfläche abzüglich des Konturbereichs ist. Beim fertigen Objekt liegt der Konturbereich dann an der äußeren Oberfläche oder aber auch an der inneren Oberfläche (beim Vorhandensein von Hohlräumen bzw. Kanälen).

Nachfolgend wird beschrieben, wie ein erfindungsgemäßes Verfahren auf der eben beschriebenen Lasersintervorrichtung durchgeführt werden kann, wobei nur die Besonderheiten gegenüber dem herkömmlichen Vorgehen beschrieben werden:
Bei einem generativen Fertigungsverfahren wie beispielsweise einem Lasersinterverfahren, bei dem Objekte schichtweise aus einem Baumaterial hergestellt werden, liegt zunächst ein CAD-Modell des herzustellenden Objekts vor, welches in Schichten zerlegt wird (sog. slicing), die den zu verfestigenden Schichten des Aufbaumaterials entsprechen. Diese Daten (auch Produktionsdaten genannt), welche die Strukturinformationen über das Objekt enthalten, werden von der Steuereinrichtung 40 für die Herstellung des Objekts verarbeitet. Erfindungsgemäß wird das ursprüngliche CAD-Modell des Objekts vor der Zerlegung in Schichten (slicing) in Modell-Teilbereiche aufgespalten (zerlegt). Nach dem slicing gibt es somit zumindest in einem Teil der Schichten Bereiche, die unterschiedlichen Modell-Teilbereichen zugeordnet sind.

Bei der nachfolgenden Herstellung des Objekts auf der Grundlage der Produktionsdaten wird dann das Aufbaumaterial in einer Schicht in den unterschiedlichen Modell-Teilbereichen auf unterschiedliche Weise verfestigt. In der Regel ist es durch die vorgenommene Zerlegung möglich, eine zeitaufwendige Verfestigung mit hoher Detailgenauigkeit nur in solchen Modell-Teilbereichen vorzusehen, bei denen dies durch die Objektgeometrie, den Einsatzzweck des Objekts oder die durch den Herstellungsprozess vorgegebenen Randbedingungen notwendig ist. Nichtsdestotrotz wird im gesamten Baubereich eine Schicht mit gleicher Dicke aufgetragen. Eine Differenzierung im Hinblick auf die unterschiedlichen Modell-Teilbereiche erfolgt durch die Verfestigungsparameter.

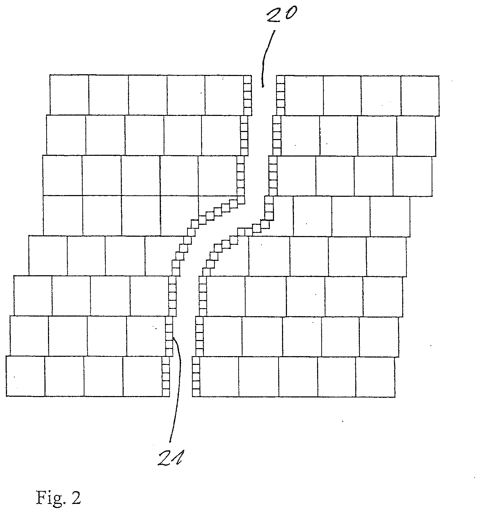

In der Regel ist es ausreichend, wenn bei einem Objekt eine Aufspaltung in zwei Modell-Teilbereiche vorgenommen wird: einen Modell-Teilbereich, der mit hoher Detailgenauigkeit verfestigt werden soll, und einen anderen Modell-Teilbereich, der mit geringerer Detailgenauigkeit (und damit schneller) verfestigt werden kann. Nichtsdestotrotz, kann man jedoch auch noch eine stärkere Differenzierung bei den Verfestigungsbedingungen vornehmen, indem man mehr als zwei Modell-Teilbereiche vorsieht. Zum Zwecke der Veranschaulichung des erfindungsgemäßen Vorgehens wird nachfolgend zwischen einem sogenannten kritischen Bereich und einem sogenannten nichtkritischen Bereich, d.h. zwei Modell-Teilbereichen, in die das dreidimensionale CAD-Modell zerlegt wurde, unterschieden. Fig. 2 zeigt einen schematischen Querschnitt durch einen Teilbereich eines mittels eines Verfahrens gemäß einem ersten Ausführungsbeispiel der vorliegenden Erfindung hergestellten Objekts, wobei der Schnitt senkrecht zu den Pulverschichten verläuft, aus denen das Objekt hergestellt wurde. Im Idealfall wird man die Schichtung beim Bauvorgang nicht mehr am fertigen Objekt erkennen. Zum Zwecke der Veranschaulichung des erfindungsgemäßen Verfahrens wurde jedoch in Figur 2 das Objekt so dargestellt, dass die einzelnen (quadratisch dargestellten) Verfestigungsbereiche zu sehen sind, die das Resultat der Einwirkung beispielsweise eines Laserstrahls auf diese Stellen des Pulvers sind.

Das in Fig. 2 gezeigte fertige Objekt weist als Besonderheit einen innen liegenden Kühlkanal 20 auf, der eine starke Krümmung aufweist. Aufgrund der Krümmung und des geringen Durchmessers ist es notwendig, die Wandbereiche 21 des Kühlkanals mit hoher Detailgenauigkeit zu fertigen. Im Gegensatz dazu weist der restliche Bereich eines Objektquerschnitts nur sehr wenige Details auf, so dass in diesem Bereich auch eine gröbere Bauweise möglich ist. Das ursprüngliche CAD-Modell wird daher in einen dem Wandbereich 21 entsprechenden Bereich als kritischem Bereich (erstem Modell-Teilbereich) und in einen das gesamte restliche Volumen des Objekts umfassenden nichtkritischen Bereich (zweiten Modell-Teilbereich) zerlegt.

Der Bauvorgang wird nun beispielsweise so durchgeführt, dass das Baumaterial Schicht für Schicht mit einer geringen Dicke d (beispielsweise 40µm) aufgetragen wird, welche so gewählt ist, dass im Wandbereich 21 des Kühlkanals eine Verfestigung mit hoher Präzision durchgeführt werden kann. Der als besonders kritisch im Hinblick auf die Detailgenauigkeit angesehene Oberflächenbereich 21 wird nun in jeder Schicht nach dem Auftrag dieser Schicht verfestigt, während der Rest der aufgetragenen Schicht zunächst nicht verfestigt wird. Erst nachdem eine gewisse Anzahl N von Schichten, N ist eine ganze Zahl größer 1, aufgebracht wurde, wird der nichtkritische Bereich eines Objektquerschnitts so verfestigt, dass das Aufbaumaterial in allen N Schichten gleichzeitig verfestigt wird. Die Verfestigung des nichtkritischen Bereichs kann beispielsweise durch Vergrößerung des Laserstrahlfokus und/oder Erhöhung der Laserleistung bewerkstelligt werden.

Gemäß der Erfindung wird innerhalb eines Objektquerschnittes nicht danach differenziert, ob sich ein zu verfestigender Teilbereich im Innern des Querschnitts befindet oder an dessen Rand, sondern es wird unterschieden zwischen besonders kritischen Randbereichen innerhalb eines Querschnittes und dem Rest des Querschnittes, wobei der Rest Innenbereiche und Randbereiche aufweisen kann.

Mit der erfindungsgemäßen Vorgehensweise ist es möglich, in einer Abfolge von N Querschnitten jeweils solche Randbereiche als kritische Bereiche zu definieren, welche durch ihr Aneinandergrenzen über die Schichtgrenzen hinweg eine Oberfläche des Objekts bilden, die mit hoher Detailgenauigkeit gefertigt werden muss.

Die Auswahl der kritischen Bereiche (Modell-Teilbereiche) kann aufgrund verschiedener Kriterien erfolgen und wird mit dem Einsatzbereich des Objektes variieren. Erfindungsgemäß ist nicht jeder Konturbereich automatisch auch ein kritischer Bereich, in dem eine Verfestigung mit hoher Detailgenauigkeit stattfinden muss.

Ein Kriterium für die Festlegung eines kritischen Bereichs kann beispielsweise die Neigung einer Oberfläche sein: Geneigte Oberflächen können deshalb als kritisch angesehen werden, weil bedingt durch das Schichtbauverfahren stets eine Stufung auf der Oberfläche vorhanden ist. Daher würde man solch eine geneigte Oberfläche als kritischen Teilbereich im CAD-Modell des Objekts definieren. Die Neigung von Oberflächen im CAD-Modell kann durch eine Software automatisch erkannt werden. Dadurch können geneigte Oberflächen automatisiert als kritische Bereiche erkannt werden, denen automatisiert ein eigener Modell-Teilbereich bei der Zerlegung zugeordnet wird. Gleiches gilt für einen bei dem ersten Ausführungsbeispiel beschriebenen Innenkanal.

Ein anderes Auswahlkriterium für die Festlegung eines kritischen Bereichs kann die mechanische Bearbeitbarkeit von Oberflächen sein. Vor allem bei der Fertigung von Werkzeugeinsätzen müssen Oberflächen des fertigen Bauteils in der Regel einer mechanischen Feinbearbeitung ("Finishing") z.B. mittels Fräsens unterzogen werden. Insbesondere kleine Kanäle im Inneren des Objektes können jedoch nicht mittels Fräsen erreicht werden. Für diese ist allenfalls an eine aufwendige Bearbeitung mittels Funkenerodierung zu denken. Die vorliegende Erfindung schlägt hier vor, solche Oberflächenbereiche als einen gesonderten kritischen Bereich anzusehen und mit hoher Detailgenauigkeit zu verfestigen.

Ein weiteres Auswahlkriterium für die Festlegung von kritischen Bereichen kann die geringe Größe von innen liegenden Hohlräumen sein, welche dazu führt, dass die Wände der Hohlräume mit hoher Präzision gefertigt werden müssen um ein unbeabsichtigtes Verschließen (Ausfüllen) des Hohlraums zu vermeiden.

Weiterhin kann ein kritischer Bereich ein Oberflächenbereich sein, der eine hohe Oberflächenqualität aufweist. Ein Maß für die Oberflächengüte kann beispielsweise der Mittenrauwert sein, der Aussagen über die Rauheit zulässt.

Ferner können auch Teilbereiche des Innenbereichs kritische Bereiche sein, beispielsweise jene Stellen eines Objekts, die besonders filigran sind.

Die Auswahl der kritischen Bereiche kann anhand der oben beispielhaft vorgegebenen Kriterien erfolgen. Beispielsweise können mittels eines Algorithmus Krümmungen von Oberflächen oder Durchmesser von Hohlräumen oder Stegen in den einzelnen Objektquerschnitten ermittelt werden und dann automatisch (durch ein Computerprogramm) eine Zerlegung des CAD-Modells in Modell-Teilbereiche vorgenommen werden.

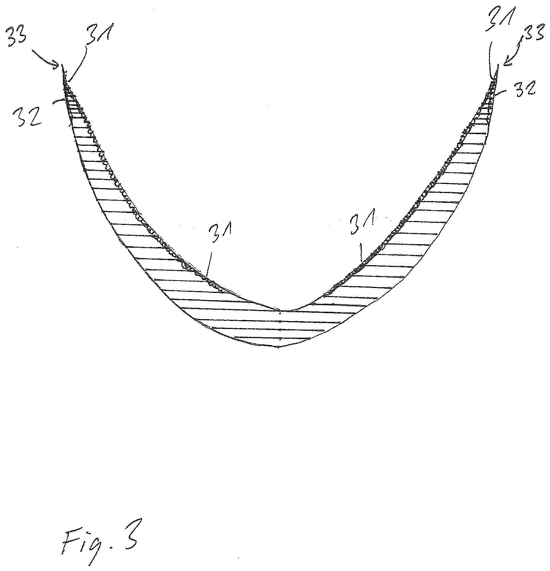

Fig. 3 zeigt zur Veranschaulichung eines weiteren Ausführungsbeispiels der Erfindung einen Schnitt durch ein Dentalkäppchen, beispielsweise ein Overlay oder eine Krone, wobei die Schnittrichtung senkrecht zu den Schichten gewählt ist.

Bei dem gezeigten Dentalkäppchen weisen die zum Zahnfleisch hin zeigenden "spitzen" Enden 33 nur einen geringen Durchmesser auf. Nach der Integration des Käppchens auf einem Zahnstumpf sind diese Spitzen nicht einmal mehr auf ihrer vom Zahnstumpf weg zeigenden Außenfläche 32 für eine mechanische Bearbeitung zugänglich. Das Gleiche gilt für die Fläche 31 des Käppchens, die zum Zahnstumpf hin zeigt. Auch diese Fläche kann nach dem Aufsetzen des Käppchens nicht mehr bearbeitet werden. Die von dem Zahnstumpf wegzeigende Oberfläche des Dentalkäppchens kann demgegenüber nach dem Einbau vom Zahnarzt beschliffen werden.

Aufgrund dieser Gegebenheiten wird bei diesem Beispiel für das erfindungsgemäße Verfahren die Innenfläche des Dentalkäppchens als kritische Oberfläche angesehen werden. Auch der Teil der Außenfläche des Dentalkäppchens, der nach der Integration des Käppchens nur mehr schlecht bearbeitet werden kann, also die Außenfläche 32 der spitzen Enden 31, wird als kritisch angesehen. Das Erkennen der kritischen Bereiche kann auch im Falle der Dentalkäppchen automatisiert erfolgen. Sobald an einem Muster definiert wurde, was die kritischen Bereiche sind, kann eine Software automatisiert solche kritischen Bereiche an den individuellen Dentalkäppchen-CAD-Modellen identifizieren.

Bei dem erfindungsgemäßen Verfahren zum Herstellen der Dentalkäppchen wird das Baumaterial in dünnen Schichten mit einer Schichtdicke von 10 µm aufgetragen und nach dem Auftrag einer Schicht lediglich in den kritischen Oberflächenbereichen verfestigt. In allen übrigen Teilbereichen des Dentalkäppchens erfolgt eine Verfestigung lediglich nach dem Auftrag jeder zweiten Schicht. Mit dieser Vorgehensweise kann die Bauzeit deutlich reduziert werden, obwohl keine Einbußen hinsichtlich der Detailgenauigkeit in Kauf genommen werden müssen, welche die Qualität des fertiggestellten Dentalkäppchens reduzieren.

Bei der oben beschriebenen automatischen Erkennung bestimmter Objektgeometrien (z.B. Lage und Gestalt von Oberflächenbereichen) macht man sich unter anderem zunutze, dass im dreidimensionalen CAD-Modell zwischen der Kontur und innenliegenden Bereichen eines Querschnitts unterschieden werden kann. Beim Slicing unter Zuhilfenahme einer Tesselation bzw. Triangulation, das zum verbreiteten STL-Format führt, kann auf einfache Weise zwischen Polygonen (in der Regel Dreiecken) im Randbereich und im Innenbereich unterschieden werden. Beispielsweise kann ein Polygon, welches Ecken aufweist, die nicht gleichzeitig Ecken eines anderen Polygons sind, als in der Kontur liegendes Polygon definiert werden.

Zwar wurde das erfindungsgemäße Verfahren am Beispiel einer Lasersintervorrichtung beschrieben, jedoch lässt es sich in gleicher Weise auf alle anderen Schichtbauverfahren anwenden, bei denen die Verfestigung mittels elektromagnetischer Strahlung oder mittels energetischer Teilchen (z.B. Elektronen) erfolgt. Insbesondere ist es möglich, die Bestrahlung zur Verfestigung durch Masken auf das Baumaterial zu leiten, wobei die Masken jeweils in dem zu bestrahlenden Bereich offen sind.

Ferner ist die erfindungsgemäße Herangehensweise nicht auf Pulver als Baumaterial beschränkt, sondern lässt sich ebenfalls bei flüssigem Baumaterial anwenden, beispielsweise in der Stereolithographie.

## Patentansprüche

1. Verfahren zum schichtweisen Herstellen eines dreidimensionalen Objekts auf der Grundlage eines dreidimensionalen CAD-Modells,
wobei das Verfahren folgende Schritte beinhaltet:
Abändern des dreidimensionalen CAD-Modells des herzustellenden Objekts durch Zerlegung desselben in dreidimensionale Modell-Teilbereiche (21, 31, 32)
Herstellen des dreidimensionalen Objekts mittels eines generativen Schichtbauverfahrens auf der Grundlage des abgeänderten dreidimensionalen CAD-Modells, wobei
ein pulverförmiges oder flüssiges Aufbaumaterial, das mittels Einwirkung von elektromagnetischer oder energetischer Teilchenstrahlung verfestigbar ist, schichtweise aufgetragen wird, und das Aufbaumaterial in jeder Schicht an jenen Stellen durch Belichtung mittels elektromagnetischer oder energetischer Teilchenstrahlung verfestigt wird, die einem dieser Schicht zugeordneten Querschnitt in dem abgeänderten CAD-Modell entsprechen, wobei jeder Querschnitt aus einem Konturbereich und einem Innenbereich besteht,
wobei
es einen Querschnitt gibt, der einen einem Modell-Teilbereich zugeordneten Teilquerschnitt aufweist, wobei der Teilquerschnitt sowohl einen Abschnitt des Innenbereichs als auch einen Abschnitt des Konturbereichs umfasst, und
es in diesem Querschnitt mindestens zwei Teilquerschnitte gibt, die jeweils unterschiedlichen Modell-Teilbereichen zugeordnet sind, die unterschiedliche Abschnitte des Konturbereichs beinhalten und in denen das Verfestigen des Aufbaumaterials in voneinander unterschiedlicher Weise durchgeführt wird durch unterschiedliche Wahl der Belichtungsparameter.

2. Verfahren nach Anspruch 1, bei dem kritische Bereiche des Objekts, in denen das Objekt mit besonders hoher Genauigkeit gefertigt werden muss, automatisiert einem oder mehreren Modell-Teilbereichen (21, 31, 32) zugewiesen werden.

3. Verfahren nach Anspruch 2, bei dem ein kritischer Bereich dadurch definiert ist, dass er mindestens eines der folgenden Kriterien erfüllt:
- es handelt sich um eine Außen- oder Innenfläche im CAD-Modell, welche einer Fläche des herzustellenden Objekts entspricht, die während der Herstellung des Objekts in eine Richtung zeigt, die entgegengesetzt zur Richtung, in der die Schichten aufeinandergeschichtet werden, ist;
- es handelt sich um eine Innenfläche im CAD-Modell, die einer Begrenzungsfläche eines im Innern des Objekts verlaufenden Kanals entspricht;
- es handelt sich um eine Außen- oder Innenfläche im CAD-Modell, die einer Fläche des Objekts entspricht, welche nach Fertigstellung des Objekts nicht durch mechanische Bearbeitung nachbearbeitbar ist.

4. Verfahren zum schichtweisen Herstellen eines dreidimensionalen Objekts nach einem der Ansprüche 1 bis 3, das folgenden Teilschritt enthält:
es wird nacheinander eine Anzahl von N Schichten aufgetragen, wobei N eine ganze Zahl größer als 1 ist und nach jedem Schichtauftrag eine Verfestigung in dem einem ersten Modell-Teilbereich zugeordneten Teil der Schicht durchgeführt wird ohne dass eine Verfestigung in dem einem zweiten Modell-Teilbereich zugeordneten Teil der Schicht durchgeführt wird,
nach dem Auftrag der N-ten Schicht erfolgt in dem einem zweiten Modell-Teilbereich zugeordneten Teil der Schicht eine Verfestigung des Baumaterials in allen N Schichten gleichzeitig.

5. Verfahren nach einem der Ansprüche 1 bis 4, wobei ein Modell-Teilbereich lediglich einen Teil des Innenbereichs des Objekts umfasst.

6. Verfahren nach einem der Ansprüche 1 bis 5, bei dem pulverförmiges Aufbaumaterial verwendet wird und die elektromagnetische Strahlung mittels eines Lasers zugeführt wird.

7. Verfahren nach einem der Ansprüche 1 bis 6, bei dem die Verfestigung in einem Modell-Teilbereich mit einem kleinen Strahlfokus erfolgt und die Verfestigung in einem anderen Modell-Teilbereich mit einem großen Strahlfokus erfolgt.

8. Verfahren nach einem der Ansprüche 1 bis 7, bei dem bei der Verfestigung in dem einen Modell-Teilbereich Strahlung mit geringerer Energiedichte verwendet wird als bei der Verfestigung in einem anderen Modell-Teilbereich.

## Claims

1. A method for a layer-wise manufacturing of a three-dimensional object based on a three-dimensional CAD model,
wherein the method comprises the following steps:
modifying the three-dimensional CAD model of the object to be manufactured by dividing the same into three-dimensional model partitions (21, 31, 32)
manufacturing the three-dimensional object by means of an additive layer-wise manufacturing method based on the modified three-dimensional CAD model, wherein
a powdery or liquid building material that can be solidified by the action of electromagnetic or energetic particle radiation is applied layer-wise and the building material in each layer is solidified by exposure to electromagnetic or energetic particle radiation at those positions that corresponds to a cross-section in the modified CAD model assigned to this layer, wherein each cross-section consists of a contour region and an inner region,
wherein
there exists a cross-section comprising a partial cross-section assigned to a model partition, wherein the partial cross-section comprises a section of the inner region as well as a section of the contour region, and
wherein in this cross-section there are at least two partial cross-sections, which are respectively assigned to different model partitions that comprise different sections of the contour region and in which the solidification of the building material is implemented differently by setting the exposure parameters differently.

2. The method of claim 1, wherein critical regions of the object, in which the object has to be manufactured with a particularly high precision, are automatically assigned to one or more model partitions (21, 31, 32).

3. The method of claim 2, wherein a critical region is defined by meeting at least one of the following criteria:
- it is an outer or inner surface in the CAD model that corresponds to a surface of the object to be manufactured which during the manufacturing of the object is opposed to the direction in which the layers are stacked upon one another;
- it is an inner surface in the CAD model that corresponds to a boundary surface of a channel running through the inside of the object;
- it is an outer surface or inner surface in the CAD model that corresponds to a surface of the object which cannot be re-worked by a mechanical treatment after the completion of the object.

4. The method for a layer-wise manufacturing of a three-dimensional object of one of claims 1 to 3, which includes the following sub-step:
a number of N layers is applied successively, wherein N is an integer larger than 1 and after each layer application a solidification is carried out in a part of the layer that is assigned to a first model partition without carrying out a solidification in a part of the layer that is assigned to a second model partition,
after the application of the N-th layer, in that part of the layer that is assigned to a second model partition a solidification of the building material is carried out in all N layers simultaneously.

5. The method according to one of claims 1 to 4, wherein a model partition comprises only a part of the inner region of the object.

6. The method according to one of claims 1 to 5, wherein building material in powder form is used and the electromagnetic radiation is applied by means of a laser.

7. The method according to one of claims 1 to 6, wherein in one model partition the solidification is carried out with a small beam focus and in another model partition the solidification is carried out with a large beam focus.

8. The method according to one of claims 1 to 7, wherein for the solidification in said one model partition radiation is used that has a lower energy density than for the solidification in another model partition.

## Revendications

1. Procédé de fabrication par couches d'un objet tridimensionnel sur la base d'un modèle CAD tridimensionnel,
dans lequel le procédé contient les étapes suivantes :
modification du modèle CAD tridimensionnel de l'objet à fabriquer par décomposition de celui-ci en zones partielles de modèle tridimensionnelles (21, 31, 32)
fabrication de l'objet tridimensionnel au moyen d'un procédé de construction par couche génératif sur la base du modèle CAD tridimensionnel modifié, dans lequel
un matériau de construction pulvérulent ou liquide, qui peut être solidifié sous l'action d'un rayonnement de particules électromagnétique ou énergétique, est appliqué par couches, et le matériau de construction est solidifié dans chaque couche aux endroits par éclairage au moyen d'un rayonnement de particules électromagnétique ou énergétique, qui correspondent à une section transversale associée à cette couche dans le modèle CAD modifié, dans lequel chaque section transversale se compose d'une zone de contour et d'une zone intérieure,
dans lequel
il y a une section transversale qui présente une section transversale partielle associée à une zone partielle de modèle, dans lequel la section transversale partielle comprend aussi bien une section de la zone intérieure qu'une section de la zone de contour, et
il y a dans cette section transversale au moins deux sections transversales partielles, qui sont associées à des zones partielles de modèle respectivement différentes, qui contiennent différentes sections de la zone de contour et dans lesquelles la solidification du matériau de construction est effectuée de manière différente l'une de l'autre par différente sélection des paramètres d'éclairage.

2. Procédé selon la revendication 1, dans lequel des zones critiques de l'objet, dans lesquelles l'objet doit être fabriqué avec une précision particulièrement élevée, sont affectées de manière automatisée à une ou plusieurs zones partielles de modèle (21, 31, 32).

3. Procédé selon la revendication 2, dans lequel une zone critique est définie par le fait qu'elle remplit au moins un des critères suivants :
- il s'agit d'une surface extérieure ou intérieure dans le modèle CAD, laquelle correspond à une surface de l'objet à fabriquer qui est dirigée pendant la fabrication de l'objet dans une direction qui est opposée à la direction dans laquelle les couches sont superposées ;
- il s'agit d'une surface intérieure dans le modèle CAD, qui correspond à une surface de délimitation d'un canal s'étendant à l'intérieur de l'objet ;
- il s'agit d'une surface extérieure ou intérieure dans le modèle CAD qui correspond à une surface de l'objet, laquelle n'est pas usinable par usinage mécanique après finalisation de l'objet.

4. Procédé de fabrication par couches d'un objet tridimensionnel selon l'une quelconque des revendications 1 à 3, qui contient l'étape partielle suivante :
un nombre de N couches est appliqué les unes après les autres, dans lequel N est un nombre entier supérieur à 1 et après chaque application de couche une solidification dans la partie de la couche associée à une première zone partielle de modèle est effectuée sans qu'une solidification dans la partie de la couche associée à une deuxième zone partielle de modèle soit effectuée,
après l'application de la Nième couche, une solidification du matériau de construction a lieu en même temps dans toutes les N couches dans la partie de la couche associée à une deuxième zone partielle de modèle.

5. Procédé selon l'une quelconque des revendications 1 à 4, dans lequel une zone partielle de modèle comprend seulement une partie de la zone intérieure de l'objet.

6. Procédé selon l'une quelconque des revendications 1 à 5, dans lequel du matériau de construction pulvérulent est utilisé et le rayonnement électromagnétique est réalisé au moyen d'un laser.

7. Procédé selon l'une quelconque des revendications 1 à 6, dans lequel la solidification a lieu dans une zone partielle de modèle avec un petit foyer d'irradiation et la solidification a lieu dans une autre zone partielle de modèle avec un grand foyer d'irradiation.

8. Procédé selon l'une quelconque des revendications 1 à 7, dans lequel lors de la solidification dans l'une zone partielle de modèle un rayonnement de densité d'énergie inférieure que lors de la solidification dans une autre zone partielle de modèle est utilisé.
